# EUROPEAN PATENT SPECIFICATION

(11) **EP 3 859 385 B1**
(45) Date of publication and mention of the grant of the patent: **27.11.2024**
(21) Application number: 19866352.8
(22) Date of filing: 27.09.2019
(51) Int. Cl.: G01S 17/86, G01S 17/66, G01S 13/86, G01S 17/931, G01S 13/931, G01S 13/72, G06F 18/25

(54) **DATA FUSION METHOD AND APPARATUS FOR VEHICLE SENSOR**
VERFAHREN UND VORRICHTUNG ZUR DATENFUSION FÜR EINEN FAHRZEUGSENSOR
PROCÉDÉ ET APPAREIL DE FUSION DE DONNÉES POUR CAPTEUR DE VÉHICULE

(30) Priority: 30.09.2018 CN 201811154323
(43) Date of publication of application: 04.08.2021
(73) Proprietor: Great Wall Motor Company Limited, Baoding, Hebei 071000 (CN)
(72) Inventor: GE, Jianyong, Baoding, Hebei 071000 (CN); WANG, Tianpei, Baoding, Hebei 071000 (CN); ZHANG, Kai, Baoding, Hebei 071000 (CN); LIU, Hongwei, Baoding, Hebei 071000 (CN); LIU, Hongliang, Baoding, Hebei 071000 (CN); REN, Yaxing, Baoding, Hebei 071000 (CN); HE, Lin, Baoding, Hebei 071000 (CN); LI, Xiaochuan, Baoding, Hebei 071000 (CN)
(74) Representative: Nederlandsch Octrooibureau
(86) International application number: PCT/CN2019/108400
(87) International publication number: WO 2020/063814

(56) References cited:
- CN-A- 101 395 492
- CN-A- 103 852 762
- CN-A- 106 030 336
- CN-A- 106 842 188
- US-A1- 2003 179 084
- US-A1- 2017 043 771
- US-A1- 2018 267 544

## Description

### Field of the Invention

The present invention relates to the field of data fusion, and in particular, to a data fusion method and device for vehicle sensors.

### Background of the Invention

Due to performance deficiencies, a single sensor cannot achieve target detection for obstacles in some situations, for example, a camera cannot detect targets under poor lighting conditions. Therefore, an autonomous vehicle needs a variety of sensors to detect targets in order to achieve all-round perception of the surrounding environment.

If target data detected by a plurality of sensors is output directly, a huge amount of data is transmitted, and the following problems will be caused: a target is falsely detected, for example, there is no obstacle but an obstacle is output; missed detection of a target occurs, for example, there is an obstacle but no obstacle is output; attributes of a same target are inconsistent; and optimal attributes of a target cannot be acquired, etc. These problems will cause great inconvenience in the judgment logic of a decision-making system, and reduce the safety and operating efficiency of the entire system.

The patent application US 2017/043771 describes a device performing real-time signaling of at least one object to a navigation module of a vehicle. The device includes a first sensor to produce first-sensor data including a first captured position and a first captured speed of the object relative to the vehicle, at least one second sensor to produce second-sensor data including a second captured position and a second captured speed of the object relative to the vehicle, a synchronization module to produce synchronized data including a first synchronized position from the first captured position and the first captured speed and at least one second synchronization position from the second captured position and the second captured speed, and a merging module to produce merged data including a merged position from the first synchronized position and the second synchronized position to signal the object to the navigation module by communicating all or part of the merged data thereto.

The patent application US 2018/0267544 describes a system, methods, and other embodiments relating to associating disparate tracks from multiple sensor inputs for observed objeets. In one embodiment, a method includes, in response to receiving a first input from a first sensor and a second input from a second sensor, generating the disparate tracks including first sensor tracks and second sensor tracks for the observed objects that correspond to the first input and the second input.

### Summary of the Invention

In view of this, an objective of the present invention is to propose a data fusion method for vehicle sensors to at least solve the technical problem of a huge amount of data transmitted caused by direct output of target data detected by a plurality of sensors.

To achieve the above objective, a technical solution of the present invention is implemented by a data fusion method for vehicle sensors in accordance with claim 1.

According to an embodiment, the method comprises that if the determined coincidence degree of the parameter attribute sets in the attribute combination has a plurality of values, a largest value in the plurality of values is selected as the coincidence degree of the parameter attribute sets in the attribute combination.

According to an embodiment, the method comprises that the predetermined range is determined by the following steps: selecting a predetermined range corresponding to a parameter attribute detected by a specific sensor among the *n* parameter attributes from a pre-stored predetermined range list, wherein the predetermined range list may include a range of the parameter attribute detected by the specific sensor and a predetermined range corresponding to the range of each parameter attribute detected by the specific sensor.

According to a further embodiment, the method comprises the discrete degree is a standard deviation, variance, or average deviation.

According to an embodiment, the method further comprises : deleting repeatedly fused data in the first data fusion list to obtain a second data fusion list.

According to an embodiment, the method comprises that the parameter attribute set further comprise target ID, and the method comprises deleting the repeatedly fused data by the following steps: determining whether a target ID set corresponding to a coincidence degree *p* is included in a target ID set corresponding to a coincidence degree *q,* wherein a value of *q* is greater than a value of *p*; and if the target ID set corresponding to the coincidence degree *p* is included in the target ID set corresponding to the coincidence degree *q,* deleting data corresponding to the coincidence degree *p* from the first data fusion list, wherein *p* and *q* are both positive integers, the value of *p* is greater than or equal to 1 and less than the largest value of the coincidence degree, and the value of *q* is greater than 1 and less than or equal to the largest value of the coincidence degree.

According to an embodiment, the method comprises generating the attribute combinations according to the read parameter attribute set of each target detected by each of the sensors comprises: adding a parameter attribute set of an empty target to the parameter attribute sets of the one or more targets detected by each sensor respectively; and generating the attribute combinations based on the parameter attribute sets added with the parameter attribute set of the empty target.

Compared with the prior art, the data fusion method for the vehicle sensors of the present invention has the following advantages:
in the data fusion method for the vehicle sensors of the present invention, the parameter attribute sets of each target detected by the sensors are combined, and a coincidence degree of the parameter attribute sets in each attribute combination is determined, and then data fusion is performed based on the coincidence degree to obtain a first data fusion list. In the first data fusion list, the parameter attribute sets for the same target are fused, so that a decision-making system conveniently uses the data fusion list subsequently, the judgment logic of the decision-making system is simplified, and the safety and operating efficiency of the entire system are improved.

Another objective of the present invention is to propose a data fusion device for vehicle sensors to at least solve the technical problem of a huge amount of data transmitted caused by direct output of target data detected by a plurality of sensors.

To achieve the above objective, a technical solution of the present invention is implemented as follows.

According to an embodiment, the invention relates to a data fusion device for vehicle sensors includes a memory and a processor, wherein the memory stores instructions which are configured to enable the processor to execute the above-mentioned data fusion method for the vehicle sensors.

The data fusion device for the vehicle sensors has the same advantages as the above-mentioned data fusion method for vehicle sensors over the prior art, which will not be described in detail herein. Other features and advantages of embodiments of the present invention will be described in detail in the subsequent section of detailed description of the embodiments.

### Brief Description of Drawings

The accompanying drawings are intended to provide further understanding of the embodiments of the present invention and form part of the specification, and are used, together with the following specific implementations, for explaining the embodiments of the present invention, but do not limit the embodiments of the present invention. In the drawings:
Fig. 1 shows a flow diagram of a data fusion method for vehicle sensors according to an embodiment of the present invention;
Fig. 2 shows a schematic diagram of a process of determining a coincidence degree of parameter attribute sets in an attribute combination according to an embodiment of the present invention; and
Fig. 3 shows a structural block diagram of a data fusion device for vehicle sensors according to an embodiment of the present invention.

**Brief Description of the Symbols:**

| | | | |
|---|---|---|---|
| 310 | Memory | 320 | Processor |

### Detailed Description of the Embodiments

Specific implementations of the embodiments of the present invention will be described in detail below in conjunction with the accompanying drawings. It should be understood that the specific implementations described herein are only used for illustrating and explaining the embodiments of the present invention, instead of limiting the embodiments of the present invention.

A "sensor" mentioned in the embodiments of the present invention may be any type of device arranged on a vehicle for detecting a target, for example, may be a camera, lidar, millimeter-wave radar or the like. A "target" mentioned in the embodiments of the present invention may be any moving or stationary object in front of, behind or at a lateral side of a vehicle, such as an automobile, a human, or a building.

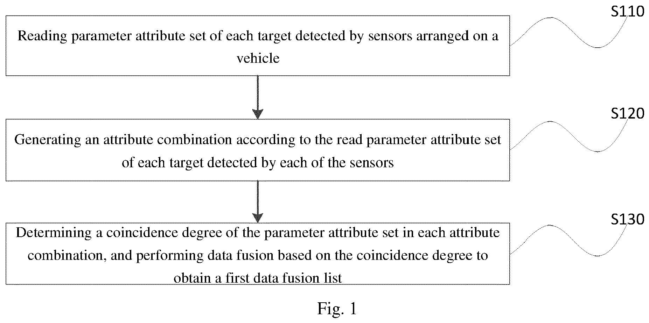

Fig. 1 shows a flow diagram of a data fusion method for vehicle sensors according to an embodiment of the present invention. As shown in Fig. 1, an embodiment of the present invention provides a data fusion method for vehicle sensors. The method may be set to be executed in real time or set to be executed once every predetermined time. The method may include steps S110 to S130.

In step S110, parameter attribute set of each target detected by sensors arranged on a vehicle are read. Herein, it is possible to read a parameter attribute set of each target detected by each of a plurality of sensors selected in advance, or read a parameter attribute set of each target detected by each of all sensors, wherein the sensors may be of a same type or different types.

A sensor may detect one or more targets, and for each target, the sensor may determine a parameter attribute set of each target. The parameter attribute set includes multiple types of parameter attributes, such as parameter attributes related to speed, distance, and the like. The parameter attribute set read in the step S 110 includes one or more of: a longitudinal speed, a longitudinal distance, and a lateral distance. In the embodiment of the present invention, the longitudinal speed may a speed of the detected target along a traveling direction of the vehicle; the longitudinal distance may be a longitudinal distance of the detected target relative to the vehicle; and the lateral distance may be a lateral distance of the detected target relative to the vehicle, wherein the longitudinal speed, the longitudinal distance and the lateral distance may be determined in a vehicle coordinate system. It may be understood that the parameter attribute set of the target may include other parameter attributes, such as a lateral speed, a longitudinal accelerated speed of the target, a lateral accelerated speed of the target, a length of the target, and/or a width of the target.

It may be understood that in the step S110, the read parameter attribute sets detected by the sensors are parameter attribute sets detected by the sensors at approximately the same time.

In step S120, an attribute combination is generated according to the read parameter attribute set of each target detected by each of the sensors.

Each generated attribute combination may include a parameter attribute set of one target selected respectively from the one or more targets detected by each sensor. That is, the attribute combination includes the same number of parameter attribute set as the sensors, and the included parameter attribute sets are detected by different sensors respectively. In actual execution, the parameter attribute sets of one target detected by one sensor may be successively acquired respectively to generate the attribute combination. It may be understood that the number of the generated attribute combinations may be a product of the numbers of the targets detected by each sensor.

As a simple example, suppose there are three sensors, which are denoted as ***A, B,*** and ***C*,** respectively. A sensor ***A*** detects two targets, and obtains parameter attribute sets of the two targets, respectively, denoted as A1 and A2. A sensor ***B*** detects three targets, and obtains parameter attribute sets of the three targets, respectively, denoted as B1, B2, and B3. A sensor ***C*** detects one target, and obtains a parameter attribute set of the one target, denoted as C1. The parameter attribute sets of the targets detected by the sensors ***A, B**,* and ***C*** are read, and 6 attribute combinations may be generated according to the read parameter attribute sets of the targets. The 6 attribute combinations are, for example: {A1, B1, C1}, {A1, B2, C1}, {A1, B3, C1}, {A2, B1, C1}, {A2, B2, C1}, and {A2, B3, C1}, respectively.

In step S130, a coincidence degree of the parameter attribute sets in each attribute combination is determined, and data fusion is performed based on the coincidence degree to obtain a first data fusion list.

The first data fusion list may include the coincidence degree of each attribute combination and the parameter attribute sets corresponding to the coincidence degree of each attribute combination.

In the embodiment of the present invention, the coincidence degree refers to the number of parameter attribute sets corresponding to a same target in the attribute combination. As a simple example, if parameter attribute sets A1 and B1 in an attribute combination including parameter attribute sets A1, B1, and C1 correspond to a same target, it may be determined that a coincidence degree of this attribute combination is 2. The obtained first data fusion list may include the coincidence degree value of 2 and the parameter attribute sets A1 and B1 corresponding to the coincidence degree value of 2.

A plurality of coincidence degrees may also be determined for one attribute combination, and the plurality of coincidence degrees and parameter attribute sets corresponding to each of the plurality of coincidence degrees may be included in the first data fusion list.

The first data fusion list is generated and output by fusing parameter attribute sets corresponding to the same target, so that a decision-making system more conveniently uses the parameter attributes of the target subsequently, thereby simplifying the judgment logic of the decision-making system.

In some embodiments, a sensor may detect no target, and accordingly may not output a parameter attribute set of a target, which means that a parameter attribute set of a target cannot be read from this sensor. To facilitate subsequent calculation of the coincidence degree, when an attribute combination is generated according to the read parameter attribute set of each target detected by each sensor, a parameter attribute set of an empty target may be added first for each sensor, which is equivalent to virtualizing a detection target for each sensor. For example, if a sensor actually detects 10 targets and obtains parameter attribute set of each of the 10 targets, after a parameter attribute set of an empty target is added, the sensor corresponds to the parameter attribute sets of the 11 targets. After the parameter attribute set of the empty target is added, an attribute combination may be generated by using the parameter attribute set(s) after the addition. It may be understood that among the generated attribute combinations, there will be an attribute combination that includes parameter attribute sets of all empty targets. This attribute combination is a void attribute combination that has no practical meaning, and the void attribute combination may be deleted during actual operation.

Assuming that 5 sensors are arranged on a front side of a vehicle, the numbers of targets detected by the 5 sensors are N1, N2, N3, N4, and N5, respectively, the numbers of parameter attribute sets read correspondingly from the 5 sensors are N1, N2, N3, N4, and N5. A parameter attribute set of an empty target is added for each sensor, and the numbers of parameter attribute sets corresponding to the 5 sensors become N1+1, N2+1, N3+1, N4+1, and N5+1. To generate attribute combinations, a parameter attribute set of one target corresponding to each sensor may be successively acquired. The number of generated attribute combinations is a product of N1+1, N2+1, N3+1, N4+1, and N5+1, and after a void attribute combination is deleted, the number of the remaining attribute combinations is the product of N1+1, N2+1, N3+1, N4+1, and N5+1, minus 1. Herein, N1, N2, N3, N4, and N5 are all integers greater than or equal to 0.

By adding the parameter attribute set of the empty target, it can ensure that the number of parameter attribute sets in an attribute combination is the same as the number of the corresponding sensors, which simplifies the complexity of subsequent calculation of a coincidence degree and improves the efficiency of program operation.

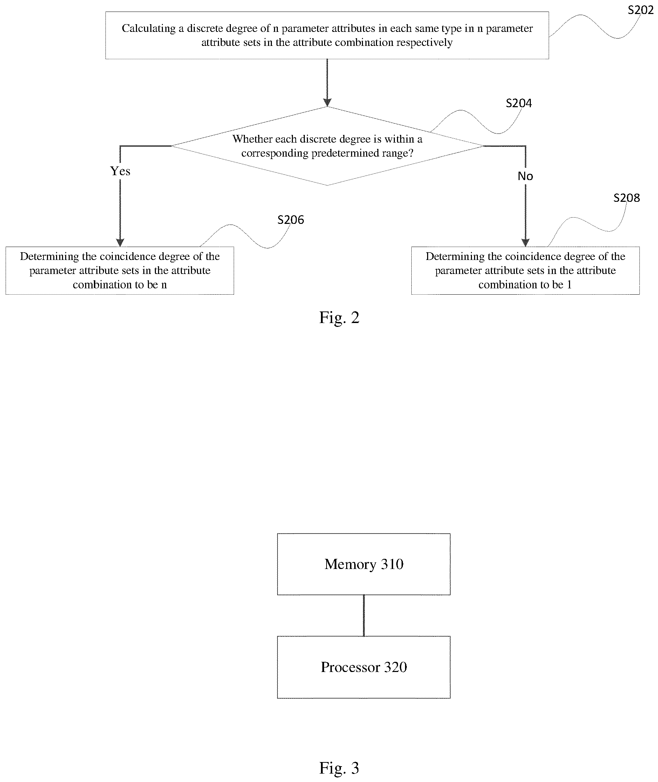

Fig. 2 shows a schematic diagram of a process of determining a coincidence degree of parameter attribute sets in an attribute combination according to an embodiment of the present invention. As shown in Fig. 2, based on any of the above embodiments, steps S202 to S208 may be executed to determine the coincidence degree for each attribute combination.

In step S202, a discrete degree of *n* parameter attributes of each same type in *n* parameter attribute sets in an attribute combination is calculated.

In the embodiment of the present invention, the discrete degree may be a standard deviation, variance, average deviation, or the like, preferably a standard deviation, but the embodiment of the present invention is not limited thereto, and any data that can represent the discrete degree may be used. In the embodiment of the present invention, *n* is a positive integer, and a value of *n* is greater than or equal to 2 and less than or equal to the number of parameter attribute sets of targets in the attribute combination.

Specifically, a discrete degree may be calculated for any n parameter attribute sets in the attribute combination, that is, a discrete degree may be calculated for n parameter attributes indicating a longitudinal speed, a discrete degree may be calculated for n parameter attributes indicating a lateral distance, or a discrete degree may be calculated for n parameter attributes indicating a longitudinal distance.

In step S204, it is determined whether the discrete degree of n parameter attributes in each same type is within a corresponding predetermined range.

Predetermined ranges corresponding to different types of parameter attributes may be fixed values. Alternatively, the predetermined ranges corresponding to different types of parameter attributes may be different, and/or for parameter attributes in a same type, if value ranges of the parameter attributes are different, the corresponding predetermined ranges may also be different.

Optionally, a predetermined range list may be pre-stored, and may include ranges of parameter attributes detected by a specific sensor and a predetermined range corresponding to the range of each parameter attribute detected by the specific sensor. In other words, predetermined ranges are determined based on ranges of parameter attributes detected by a specific sensor. Specific sensors selected for different types of parameter attributes may be different. Optionally, a sensor with higher accuracy may be used as a specific sensor. For example, for the longitudinal distance, a lidar may be used as a specific sensor, and detects different longitudinal distance ranges which correspondingly store different predetermined ranges. When the step S204 is executed, a predetermined range corresponding to a parameter attribute detected by a specific sensor among the *n* parameter attributes may be selected from the pre-stored predetermined range list, and then judgment may be made based on the predetermined range.

If it is determined in the step S204 that the discrete degree of *n* parameter attributes in each same type is within the corresponding predetermined range, step S206 is executed. If it is determined in step S204 that the discrete degree of *n* parameter attributes in each same type is not within the corresponding predetermined range, step S208 is executed.

In step S206, it may be determined that the coincidence degree of the parameter attribute sets in the attribute combination is *n,* that is, the *n* parameter attribute sets correspond to a same detection target, and the *n* parameter attribute sets may be fused. Optionally, the determined coincidence degree may have a plurality of values, and a largest value of the plurality of values may be selected as the coincidence degree of the parameter attribute sets in the attribute combination. Optionally, there may be a plurality of largest values in the determined coincidence degree. In this case, each of the plurality of largest values and parameter attribute sets corresponding thereto may all be included in the first data fusion list.

In step S208, it may be determined that the coincidence degree of the parameter attribute sets in the attribute combination is 1, that is, the *n* parameter attribute sets respectively correspond to different detection targets, and the *n* parameter attribute sets cannot be fused. In this case, each parameter attribute set of the *n* parameter attribute sets and the coincidence degree thereof may be all included in the first data fusion list.

Optionally, for each attribute combination, the coincidence degree may be determined by successively decreasing the value of *n* starting from the largest value of *n,* until the coincidence degree of the parameter attribute sets in the attribute combination is determined.

5 sensors are taken as an example for illustration, the numbers of parameter attribute sets corresponding to the 5 sensors are E1, E2, E3, E4, and E5 respectively. Attribute combinations are generated according to the parameter attribute sets corresponding to the 5 sensors, and the number of the generated attribute combinations is denoted as F. In the embodiment of the present invention, E1, E2, E3, E4, E5, and F are all positive numbers. A value of F is a product of E1, E2, E3, E4, and E5, or the value of F is a product of E1, E2, E3, E4, and E5 minus 1. Each attribute combination has 5 parameter attribute sets, and the 5 attribute sets correspond to different sensors respectively. Herein, the value of n is 2 to 5.

In calculation of a coincidence degree of parameter attribute sets in each attribute combination, the largest value 5 is first selected to be n for each attribute combination, that is, 5 parameter attribute sets in the attribute combination are used first to determine the coincidence degree. If a discrete degree of 5 parameter attributes of each type of parameter attributes in the 5 parameter attribute sets is within a corresponding predetermined range, that is, a discrete degree of 5 longitudinal speeds is within a corresponding first predetermined range, a discrete degree of 5 longitudinal distances is within a corresponding second predetermined range, and a discrete degree of 5 lateral distances is within a corresponding third predetermined range, the coincidence degree of the parameter attribute sets in the attribute combination may be determined to be 5. If the discrete degree of 5 parameter attributes of each type of parameter attributes in the 5 parameter attribute sets is not within the corresponding predetermined range, any 4 parameter attribute sets in the attribute combination are used to determine the coincidence degree. In any 4 parameter attribute sets, if a discrete degree of 4 parameter attributes of each type of parameter attributes in the 4 parameter attribute sets is within a corresponding predetermined range, the coincidence degree of the parameter attribute sets in the attribute combination may be determined to be 4. If any 4 parameter attribute sets do not meet the condition that 'a discrete degree of 4 parameter attributes of each type of parameter attributes in the 4 parameter attribute sets is within a corresponding predetermined range', any 3 parameter attribute sets in the attribute combination are used to determine the coincidence degree. In any 3 parameter attribute sets, if a discrete degree of 3 parameter attributes of each type of parameter attributes in the 3 parameter attribute sets is within a corresponding predetermined range, the coincidence degree of the parameter attribute sets in the attribute combination may be determined to be 3. If any 3 parameter attribute sets do not meet the condition that 'a discrete degree of 3 parameter attributes of each type of parameter attributes in the 3 parameter attribute sets is within a corresponding predetermined range', any 2 parameter attribute sets in the attribute combination are used to determine the coincidence degree. In any 2 parameter attribute sets, if a discrete degree of 2 parameter attributes of each type of parameter attributes in the 2 parameter attribute sets is within a corresponding predetermined range, the coincidence degree of the parameter attribute sets in the attribute combination may be determined to be 2. If any 2 parameter attribute sets do not meet the condition that 'a discrete degree of 2 parameter attributes of each type of parameter attributes in the 2 parameter attribute sets is within a corresponding predetermined range', the coincidence degree of the parameter attribute sets may be determined to be 1.

After the coincidence degree is determined, data fusion may be performed so that the first data fusion list includes each coincidence degree of each attribute combination and parameter attribute set(s) corresponding to each coincidence degree. In the obtained first data fusion list, there may be some repeatedly fused data, which means that some parameter attribute sets may be stored multiple times for a same target. If the first data fusion list are directly output to a subsequent decision-making stage, false targets may be generated.

Further, based on any of the above-mentioned embodiments, the data fusion method for the vehicle sensors provided in the embodiment of the present invention may further include deleting repeatedly fused data from the first data fusion list to obtain a second data fusion list.

The parameter attribute set in the embodiment of the present invention may also include target ID. In the first data fusion list, it may be determined whether a target ID set corresponding to any single coincidence degree *p* is included in a target ID set corresponding to any single coincidence degree *q,* wherein *p* and *q* are both positive integers, a value of *p* is greater than or equal to 1 and less than the largest value of the coincidence degree, and a value of *q* is greater than 1 and less than or equal to the largest value of the coincidence degree, wherein the value of *q* is greater than the value of *p.* If the target ID set corresponding to the single coincidence degree *p* is included in the target ID set corresponding to the single coincidence degree *q,* it indicates that a parameter attribute set corresponding to the coincidence degree *p* is repeatedly fused data and may be deleted, otherwise parameter attribute set corresponding to the coincidence degree *p* may be not deleted. For example, if the first data fusion list has the following target ID sets: a target ID set ID1/ID2/ID3/ID4/ID5 corresponding to a coincidence degree 5; a target ID set ID1/ID2/ID3/ID4 corresponding to a coincidence degree 4; a target ID set ID1/ID2 corresponding to a coincidence degree 2, it may be determined that these target ID sets correspond to a same target, and a parameter attribute set corresponding to the target ID set ID1/ID2/ID3/ID4 and a parameter attribute set corresponding to the target ID set ID1/ID2 may be deleted from the first data fusion list.

A second data fusion list may be obtained by deleting all repeatedly fused data in the first data fusion list according to the target ID. It can be understood that the repeatedly fused data may be determined by not only target ID, and may also be determined by determining whether the parameter attribute set corresponding to the single coincidence degree *p* is included in the parameter attribute set corresponding to the single coincidence degree *q.* If the parameter attribute set corresponding to the single coincidence degree *p* is included in the parameter attribute set corresponding to the single coincidence degree *q,* it may be determined that the parameter attribute set corresponding to the single coincidence degree *p* is repeatedly fused data and may be deleted.

The simplified second data fusion list is obtained by deleting the repeatedly fused data in the first data fusion list, so that false targets are not generated when the second data fusion list is used in the subsequent decision-making stage, and the accuracy of a decision-making operation in the subsequent decision-making stage is improved.

Correspondingly, an embodiment of the present invention further provides a machine-readable storage medium that stores instructions which are configured to enable a machine to execute the data fusion method for the vehicle sensors according to any embodiment of the present invention. The machine-readable medium may include any one or more of: any entity or device capable of carrying computer program codes, a recording medium, a USB flash disk, a mobile hard disk, a magnetic disk, an optical disk, a computer memory, a read-only memory (ROM), a random access memory (RAM), an electric carrier signal, a telecommunication signal and a software distribution medium, etc.

Fig. 3 shows a structural block diagram of a data fusion device for vehicle sensors according to an embodiment of the present invention. As shown in Fig. 3, the embodiment of the present invention further provides a data fusion device for the vehicle sensors. The device may include a memory 310 and a processor 320. The memory 310 may store instructions which enable the processor 320 to execute the data fusion method for the vehicle sensors according to any embodiment of the present invention.

The processor 320 may be a central processing unit (CPU), and may also be other general-purpose processor, a digital signal processor (DSP), an application specific integrated circuit (ASIC), a field-programmable gate array (FPGA) or other programmable logic devices, a discrete gate or a transistor logic device, a discrete hardware component or the like.

The memory 310 may be configured to store the computer program instructions, and the processor implements various functions of the data fusion device for the vehicle sensors by running or executing the computer program instructions stored in the memory and calling data stored in the memory. The memory 310 may include a high-speed random access memory, and may also include a non-volatile memory, such as a hard disk, an internal memory, a plug-in hard disk, a smart media card (SMC), a secure digital (SD) card, a flash card, at least one magnetic disk storage device, a flash memory device, or other volatile solid-state storage devices.

Specific working principles and benefits of the data fusion device for the vehicle sensors provided in the embodiment of the present invention are similar to specific working principles and benefits of the data fusion method for the vehicle sensors provided in the above embodiment of the present invention, and will not be described in detail herein.

Those skilled in the art may understand that all or part of the steps in the method of the above-mentioned embodiments may be implemented by relevant hardware instructed by a program, and the program is stored in a storage medium, and includes a number of instructions configured to enable a single-chip microcomputer, chip or processor to execute all or part of the steps in the method of the embodiments of the present application. The aforementioned storage medium includes: a USB flash disk, a mobile hard disk, an ROM, an RAM, a magnetic disk, an optical disk or other various media that can store program codes.

## Claims

1. A data fusion method for vehicle sensors, **characterized by** comprising:
reading a parameter attribute set for each target detected by the sensors arranged on a vehicle, the parameter attribute set at least comprising one or more of the following types: a longitudinal speed, a longitudinal distance, and a lateral distance;
generating attribute combinations of the read parameter attribute set of each target detected by each of the sensors, each attribute combination comprising a parameter attribute set of one target selected respectively from one or more targets detected by the sensors , wherein the number of the generated attribute combinations is the product of respective numbers of targets detected by each sensor; and
determining a coincidence degree of the parameter attribute sets in each attribute combination, and performing data fusion based on the coincidence degree to obtain a first data fusion list, wherein the first data fusion list comprises a coincidence degree of each attribute combination and one or more parameter attribute sets corresponding to the coincidence degree of each attribute combination, and wherein the coincidence degree refers to the number of parameter attribute sets corresponding to a same target in the attribute combination;
wherein, determining the coincidence degree of the parameter attribute sets in each attribute combination comprises executing the following steps for each attribute combination:
calculating a discrete degree of n parameter attributes for each same type in *n* parameter attribute sets in the attribute combination, respectively;
determining whether the discrete degree of the *n* parameter attributes for each same type is within a corresponding predetermined range;
if the discrete degree of *n* parameter attributes for each same type is within the corresponding predetermined range, determining the coincidence degree of the parameter attribute sets in the attribute combination to be *n*; and
if the discrete degree of the *n* parameter attributes for each same type is not within the corresponding predetermined range, determining the coincidence degree of the parameter attribute sets in the attribute combination to be 1,
wherein *n* is a positive integer, and a value of n is greater than or equal to 2 and less than or equal to the number of parameter attribute sets of targets in the attribute combination.

2. The method according to claim 1, **characterized in that** if the determined coincidence degree of the parameter attribute sets in the attribute combination has a plurality of values, a largest value in the plurality of values is selected as the coincidence degree of the parameter attribute sets in the attribute combination.

3. The method according to claim 1, **characterized in that** the predetermined range is determined by the following steps:
selecting a predetermined range corresponding to a parameter attribute detected by a specific sensor among the n parameter attributes from a pre-stored predetermined range list, wherein the predetermined range list may include a range of the parameter attribute detected by the specific sensor and a predetermined range corresponding to the range of each parameter attribute detected by the specific sensor.

4. The method according to claim 1, **characterized in that** the discrete degree is a standard deviation, variance, or average deviation.

5. The method according to any one of claims 1-4, **characterized by** further comprising:
deleting repeatedly fused data in the first data fusion list to obtain a second data fusion list.

6. The method according to claim 5, **characterized in that** the parameter attribute set further comprise target ID, and the method comprises deleting the repeatedly fused data by the following steps:
determining whether a target ID set corresponding to a coincidence degree *p* is included in a target ID set corresponding to a coincidence degree *q,* wherein a value of *q* is greater than a value of *p*; and
if the target ID set corresponding to the coincidence degree p is included in the target ID set corresponding to the coincidence degree q, deleting data corresponding to the coincidence degree *p* from the first data fusion list,
wherein *p* and *q* are both positive integers, the value of *p* is greater than or equal to 1 and less than the largest value of the coincidence degree, and the value of *q* is greater than 1 and less than or equal to the largest value of the coincidence degree.

7. The method according to any one of claims 1-4, **characterized in that** generating the attribute combinations according to the read parameter attribute set of each target detected by each of the sensors comprises:
adding a parameter attribute set of an virtual target to the parameter attribute sets of the one or more targets detected by each sensor respectively; and
generating the attribute combinations based on the parameter attribute sets added with the parameter attribute set of the virtual target.

8. A data fusion device for vehicle sensors, **characterized by** comprising a memory and a processor, wherein the memory stores instructions which are configured to enable the processor to execute the data fusion method for the vehicle sensors of any one of claims 1-7.

## Patentansprüche

1. Datenfusionsverfahren für Fahrzeugsensoren, **gekennzeichnet durch**:
Lesen einer Parameterattributmenge für jedes durch die an einem Fahrzeug angebrachten Sensoren erkannte Ziel, wobei die Parameterattributmenge mindestens einen oder mehrere der folgenden Typen aufweist: eine longitudinale Geschwindigkeit, eine longitudinale Entfernung und eine seitliche Entfernung;
Erzeugen von Attributkombinationen von der gelesenen Parameterattributmenge von jedem durch jeden der Sensoren erkannten Ziel, wobei jede Attributkombination eine Parameterattributmenge von jeweils einem aus den ein oder mehreren durch die Sensoren erkannten Zielen ausgewähltem Ziel, wobei die Anzahl der erzeugten Attributkombinationen das Produkt jeweiliger Anzahlen von durch die Sensoren erkannten Zielen ist; und
Bestimmen eines Übereinstimmungsgrades der Parameterattributmengen in jeder Attributkombination und Durchführen einer Datenfusion auf der Grundlage des Übereinstimmungsgrades zum Erhalten einer ersten Datenfusionsliste, wobei die erste Datenfusionsliste einen Übereinstimmungsgrad jeder Attributkombination und einen oder mehrere Parameterattributmengen entsprechend dem Übereinstimmungsgrad jeder Attributkombination aufweist, und wobei sich der Übereinstimmungsgrad auf die Anzahl an Parameterattributmengen, die einem gleichen Ziel in der Attributkombination entsprechen, bezieht;
wobei Bestimmen des Übereinstimmungsgrades der Parameterattributmengen in jeder Attributkombination Ausführen der folgenden Schritte für jede Attributkombination umfasst:
Berechnen jeweils eines diskreten Grades von n Parameterattributen für jeden gleichen Typ in n Parameterattributmengen;
Bestimmen, ob der diskrete Grad der n Parameterattribute für jeden gleichen Typ innerhalb eines entsprechenden vorbestimmten Bereichs ist;
falls der diskrete Grad von n Parameterattributen für jeden gleichen Typ innerhalb des entsprechenden vorbestimmten Bereichs ist, bestimmen des Übereinstimmungsgrads der Parameterattributmengen in der Attributkombination auf n; und
falls der diskrete Grad der n Parameterattribute für jeden gleichen Typ nicht innerhalb des entsprechenden vorbestimmten Bereichs ist, bestimmen des Übereinstimmungsgrades der Parameterattributmengen in der Attributkombination auf 1,
wobei n eine positive ganze Zahl ist, und ein Wert von n größer oder gleich 2 ist und kleiner oder gleich der Anzahl der Parameterattributmengen von Zielen in der Attributkombination ist.

2. Verfahren nach Anspruch 1, **dadurch gekennzeichnet, dass** falls der bestimmte Übereinstimmungsgrad der Parameterattributmengen in der Attributkombination eine Mehrzahl von Werten hat, ein größter Wert in der Mehrzahl von Werten als der Übereinstimmungsgrad der Parameterattributmengen in der Attributkombination ausgewählt wird.

3. Verfahren nach Anspruch 1, **dadurch gekennzeichnet, dass** der vorbestimmte Bereich durch die folgenden Schritte bestimmt wird:
Auswählen eines vorbestimmten Bereichs entsprechend eines durch einen bestimmten Sensor erkannten Parameterattributs unter den n Parameterattributen aus einer vorgespeicherten vorbestimmten Bereichsliste, wobei die vorbestimmte Bereichsliste einen Bereich des durch den bestimmten Sensor erkannten Parameterattributs und einen dem Bereich jedes durch den bestimmten Sensor erkannten Parameterattributs entsprechenden vorbestimmten Bereich umfassen kann.

4. Verfahren nach Anspruch 1, **dadurch gekennzeichnet, dass** der diskrete Grad eine Standardabweichung, eine Varianz oder eine durchschnittliche Abweichung ist.

5. Verfahren nach einem der Ansprüche 1 bis 4, **dadurch gekennzeichnet, dass** es ferner Folgendes aufweist:
Löschen wiederholt fusionierter Daten in der ersten Datenfusionsliste zum Erhalten einer zweiten Datenfusionsliste.

6. Verfahren nach Anspruch 5, **dadurch gekennzeichnet, dass** die Parameterattributmenge ferner eine Ziel-ID aufweist und das Verfahren löschen wiederholt fusionierter Daten durch die folgenden Schritte aufweist:
Bestimmen, ob eine Ziel-ID-Menge entsprechend eines Übereinstimmungsgrades p in einer Ziel-ID-Menge entsprechend eines Übereinstimmungsgrades q enthalten ist, wobei ein Wert von q größer als ein Wert von p ist; und
falls die Ziel-ID-Menge entsprechend dem Übereinstimmungsgrad p in der Ziel-ID-Menge entsprechend dem Übereinstimmungsgrad q enthalten ist, Löschen von Daten entsprechend dem Übereinstimmungsgrad p aus der ersten Datenfusionsliste,
wobei p und q beide positive ganze Zahlen sind, der Wert von p größer als oder gleich 1 und kleiner als der größte Wert des Übereinstimmungsgrads ist, und der Wert von q größer als 1 und kleiner als oder gleich dem größten Wert des Übereinstimmungsgrads ist.

7. Verfahren nach einem der Ansprüche 1 bis 4, **dadurch gekennzeichnet, dass** Erzeugen der Attributkombinationen gemäß der gelesenen Parameterattributmenge jedes durch jeden der Sensoren erkannten Ziels Folgendes umfasst:
Addieren einer Parameterattributmenge eines virtuellen Ziels zu den Parameterattributmengen der ein oder mehreren durch jeweils jeden Sensor erkannten Ziele; und
Erzeugen der Attributkombinationen auf der Grundlage der Parameterattributmengen mit der dazu addierten Parameterattributmenge des virtuellen Ziels.

8. Datenfusionsvorrichtung für Fahrzeugsensoren, **gekennzeichnet durch** umfassen eines Speichers und eines Prozessors, wobei der Speicher Anweisungen speichert, die eingerichtet sind, den Prozessor dazu zu befähigen, das Datenfusionsverfahren für die Fahrzeugsensoren nach einem der Ansprüche 1 bis 7 auszuführen.

## Revendications

1. - Procédé de fusion de données pour des capteurs de véhicule, **caractérisé par le fait qu'**il comprend :
lire un ensemble d'attributs de paramètres pour chaque cible détectée par les capteurs disposés sur un véhicule, l'ensemble d'attributs de paramètres comprenant au moins un ou plusieurs des types suivants : une vitesse longitudinale, une distance longitudinale et une distance latérale ;
générer des combinaisons d'attributs de l'ensemble d'attributs de paramètres lu de chaque cible détectée par chacun des capteurs, chaque combinaison d'attributs comprenant un ensemble d'attributs de paramètres d'une cible sélectionnée respectivement parmi une ou plusieurs cibles détectées par les capteurs, le nombre des combinaisons d'attributs générées étant le produit de nombres respectifs de cibles détectées par chaque capteur ; et
déterminer un degré de coïncidence des ensembles d'attributs de paramètres dans chaque combinaison d'attributs, et effectuer une fusion de données sur la base du degré de coïncidence pour obtenir une première liste de fusion de données, la première liste de fusion de données comprenant un degré de coïncidence de chaque combinaison d'attributs et un ou plusieurs ensembles d'attributs de paramètres correspondant au degré de coïncidence de chaque combinaison d'attributs, et le degré de coïncidence se référant au nombre d'ensembles d'attributs de paramètres correspondant à une même cible dans la combinaison d'attributs ;
dans lequel la détermination du degré de coïncidence des ensembles d'attributs de paramètres dans chaque combinaison d'attributs comprend l'exécution des étapes suivantes pour chaque combinaison d'attributs :
calculer un degré discret de n attributs de paramètres pour chaque même type dans n ensembles d'attributs de paramètres dans la combinaison d'attributs, respectivement ;
déterminer si le degré discret des n attributs de paramètres pour chaque même type se situe ou non dans une plage prédéterminée correspondante ;
si le degré discret de n attributs de paramètres pour chaque même type se situe dans la plage prédéterminée correspondante, déterminer que le degré de coïncidence des ensembles d'attributs de paramètres dans la combinaison d'attributs est égal à n ; et
si le degré discret des *n* attributs de paramètres pour chaque type ne se trouve pas dans la plage prédéterminée correspondante, déterminer que le degré de coïncidence des ensembles d'attributs de paramètres dans la combinaison d'attributs est égal à 1,
dans lequel *n* est un nombre entier positif, et une valeur de n est supérieure ou égale à 2 et inférieure ou égale au nombre des ensembles d'attributs de paramètres de cibles dans la combinaison d'attributs.

2. - Procédé selon la revendication 1, **caractérisé par le fait que**, si le degré de coïncidence déterminé des ensembles d'attributs de paramètres dans la combinaison d'attributs a une pluralité de valeurs, une valeur la plus grande dans la pluralité de valeurs est sélectionnée en tant que degré de coïncidence des ensembles d'attributs de paramètres dans la combinaison d'attributs.

3. - Procédé selon la revendication 1, **caractérisé par le fait que** la plage prédéterminée est déterminée par les étapes suivantes :
sélectionner une plage prédéterminée correspondant à un attribut de paramètres détecté par un capteur spécifique parmi les n attributs de paramètres à partir d'une liste de plages prédéterminées pré-stockée, la liste de plages prédéterminées pouvant inclure une plage de l'attribut de paramètres détecté par le capteur spécifique et une plage prédéterminée correspondant à la plage de chaque attribut de paramètres détecté par le capteur spécifique.

4. - Procédé selon la revendication 1, **caractérisé par le fait que** le degré discret est un écart type, une variance ou un écart moyen.

5. - Procédé selon l'une quelconque des revendications 1 à 4, **caractérisé par le fait qu'**il comprend en outre :
supprimer des données fusionnées de manière répétée dans la première liste de fusion de données pour obtenir une seconde liste de fusion de données.

6. - Procédé selon la revendication 5, **caractérisé par le fait que** l'ensemble d'attributs de paramètres comprend en outre un identifiant de cible, et le procédé comprend la suppression des données fusionnées de manière répétée par les étapes suivantes :
déterminer si un ensemble d'identifiants de cible correspondant à un degré de coïncidence *p* est ou non inclus dans un ensemble d'identifiants de cible correspondant à un degré de coïncidence *q,* une valeur de *q* étant supérieure à une valeur de *p* ; et
si l'ensemble d'identifiants de cible correspondant au degré de coïncidence *p* est inclus dans l'ensemble d'identifiants de cible correspondant au degré de coïncidence *q,* supprimer des données correspondant au degré de coïncidence *p* de la première liste de fusion de données,
dans lequel *p* et *q* sont tous deux des nombres entiers positifs, la valeur de *p* est supérieure ou égale à 1 et inférieure à la valeur la plus grande du degré de coïncidence, et la valeur de *q* est supérieure à 1 et inférieure ou égale à la valeur la plus grande du degré de coïncidence.

7. - Procédé selon l'une quelconque des revendications 1 à 4, **caractérisé par le fait que** la génération des combinaisons d'attributs en fonction de l'ensemble d'attributs de paramètres lu de chaque cible détectée par chacun des capteurs comprend :
ajouter un ensemble d'attributs de paramètres d'une cible virtuelle aux ensembles d'attributs de paramètres de la ou des cibles détectées par chaque capteur, respectivement ; et
générer les combinaisons d'attributs sur la base des ensembles d'attributs de paramètres auxquels l'ensemble d'attributs de paramètres de la cible virtuelle été ajouté.

8. - Dispositif de fusion de données pour des capteurs de véhicule, **caractérisé par le fait qu'**il comprend une mémoire et un processeur, dans lequel la mémoire stocke des instructions qui sont configurées pour permettre au processeur d'exécuter le procédé de fusion de données pour les capteurs de véhicule selon l'une quelconque des revendications 1 à 7.
